# EUROPÄISCHE PATENTSCHRIFT

(11) **EP 1 816 397 B1**
(45) Veröffentlichungstag und Bekanntmachung des Hinweises auf die Patenterteilung: **01.04.2015**
(21) Anmeldenummer: 07101622.4
(22) Anmeldetag: 02.02.2007
(51) Int. Cl.: F23J 15/06, B01D 53/26, F26B 23/00

(54) **Verfahren und Vorrichtung zur Wärmerückgewinnung, aus feuchtebelasteter Abluft**
Method and device for heat recovery, from humid exhaust air
Procédé et dispositif destinés au gain de chaleur à partir d'air chargé en humidité

(30) Priorität: 02.02.2006 DE 102006005255; 24.10.2006 DE 102006050713
(43) Veröffentlichungstag der Anmeldung: 08.08.2007
(73) Patentinhaber: Fritz Egger GmbH & Co. OG, 3105 Unterradlberg (AT)
(72) Erfinder: Obwaller, Georg, 6393, St. Ulrich am Pillersee (AT)
(74) Vertreter: Cohausz & Florack

(56) Entgegenhaltungen:
- EP-A- 0 523 684
- EP-A1- 0 385 372
- WO-A-94/21356
- DE-A1- 3 546 465
- DE-A1- 3 631 656
- FR-A- 485 639
- GB-A- 2 052 704
- US-A- 4 393 815

## Beschreibung

Die Erfindung betrifft ein Verfahren zur Wärmerückgewinnung aus in einem Trocknungsprozess anfallender feuchtebelasteter Abluft, wobei die Wärme als Niedertemperaturwärme in einen als Absorptionswärmepumpe ausgebildeten, thermodynamischen Kreisprozess eingekoppelt wird, dort auf ein höheres Temperaturniveau angehoben wird und auf dem hohen Temperaturniveau als Nutzwärme ausgekoppelt wird und wobei gleichzeitig zumindest ein Teil der in der Abluft enthaltenen Feuchtigkeit kondensiert wird. Zudem betrifft die Erfindung eine Vorrichtung zur Durchführung eines solchen Verfahrens Die Rückgewinnung von Kondensationswärme aus einem Abgasstrom ist bereits aus der Praxis bekannt. Eingesetzt wird es u.a. bei Industrieöfen verschiedener Art, bei Feststofffeuerungen, Trocknern, Rauchgasreinigungsanlagen, Dampf- und Heißwassererzeugern oder ähnlichen Anlagen im industriellen, gewerblichen oder öffentlichen, beispielsweise kommunalen, Bereich. Hier kann die Wärme aus dem Abgasstrom direkt, aus einem den Abgasstrom kühlenden Quenchwasserkreislauf oder aus sonstigem flüssigen Absorbat, wie z.B. Calciumhydroxid in Rauchgasentschwefelungsanlagen, also durch Kondensation bei gleichzeitiger Reinigung der Abgase, gewonnen werden.

In der EP 1 250 949 A1 ist ein Verfahren zur Rückgewinnung von Kondensationswärme von aus Feststofffeuerungen stammenden Abgasen mit anschließender Entschwadung der Abgase (Reduzierung der Dampffahne) beschrieben. Bei diesem Verfahren durchströmen die Abgase eine turmartig aufgebaute Anlage von unten nach oben oder auch in umgekehrter Richtung, wobei die Wärmeauskopplung in mehreren hintereinandergeschalteten konvektiven Rohrbündel-Wärmetauscherstufen erfolgt. Dabei wird die zur Entschwadung der Abgase im Kamin erforderliche Wärmeleistung über einen Luftvorwärmer aus dem Abgas gewonnen. Nachteil dieser aufwendigen Konstruktion sind etwa der große Platzbedarf der einzelnen Komponenten im Abgasstrom, deren Korrosion und Verschmutzung bzw. der daraus folgende hohe Reinigungsaufwand.

Weiterhin nachteilig an diesem Verfahren ist auch die verhältnismäßig geringe Ausbeute an latenter und fühlbarer Wärme und deren geringes Temperaturniveau, welches weit unterhalb der Sättigungstemperatur des Abgases liegt. Im Normalfall kann die so gewonnene Wärme nicht mehr wirtschaftlich verwertet und daher lediglich über Fernwärmenetze genutzt werden, was zwar ökologisch höchst sinnvollist, bekanntermaßen aber mit zumeist unwirtschaftlich hohem Aufwand für die Bereitstellung entsprechender Leitungsnetze verbunden ist.

Ein Verfahren der eingangs genannten Art ist beispielsweise aus der EP 0 523 684 A1 bekannt.

Der Erfindung liegt daher die Aufgabe zugrunde, die Effizienz der Wärmerückgewinnung zu steigern.

Die Aufgabe wird erfindungsgemäß mit einem Verfahren gemäss Anspruch 1 und einer Vorrichtung gemäss Anspruch 10 gelöst.

Mit dem erfindungsgemäßen Verfahren ist es möglich, die beispielsweise aus einem Abluftstrom gewonnene Wärme auf ein Temperaturniveau anzuheben, womit diese für die verschiedensten innerbetrieblichen Einsatzzwecke genutzt werden kann. Daneben ist natürlich jederzeit auch eine außerbetriebliche Nutzung, beispielsweise als Wärmequelle in einem Nutzwärmenetz, insbesondere einem Fernwärmenetz möglich.

Die für die Ausführung des thermodynamischen Kreisprozesses geeigneten Vorrichtungen können kompakt ausgelegt sein. Im Normalfall werden sie als ein auf einem Rahmen vormontiertes Package geliefert und als solches unmittelbar aufgestellt und angeschlossen. Im Gegensatz zu bekannten Verfahren und Anlagen zur Wärmerückgewinnung aus einem Abgasstrom ist es insbesondere nicht erforderlich, sie in einer räumlich vorgegebenen Weise, beispielsweise übereinander, anzuordnen. Durch die somit gewonnene hohe Flexibilität in der Anlagengestaltung können sowohl investive als auch Betriebskosten eingespart werden.

Die Wärme wird erfindungsgemäß durch lediglich eine Wärmekopplungseinheit, vorzugsweise einen Wärmetauscher, in den thermodynamischen Kreisprozess eingeleitet. Dies hat den Vorteil, dass entsprechend auch nur eine Anlagenkomponente ggf. einer Verschmutzung und Korrosion ausgesetzt ist, was den Reinigungsaufwand und damit die Betriebskosten weiter senkt.

Durch die gleichzeitig zumindest zum Teil erfolgende Kondensation der in der Abluft enthaltenen Feuchtigkeit wird eine wirksame Entschwadung (Reduzierung der Dampffahne) der Abluft erreicht.

Hierbei besteht eine Verfahrensvariante darin, die Niedertemperaturenergie über einen unmittelbar im Abgasstrom vorgesehenen Wärmetauscher in den thermodynamischen Kreisprozess einzukoppeln. Der Wärmetauscher ist hierbei vorzugsweise als Geradrohrbündel-Wärmetauscher ausgebildet.

Nach einer besonders bevorzugten Ausgestaltung des erfindungsgemäßen Verfahrens ist vorgesehen, dass die Niedertemperaturenergie über einen in einemZirkulations-oder Quenchwasserkreislauf vorgesehenen Wärmetauscher aus dem Abgasstrom in den Kreisprozess eingekoppelt wird. Hier ist somit der die Wärme in den thermodynamischen Kreisprozess einkoppelnde Wärmetauscher nicht mehr den ggf. verschmutzenden und korrosiven Bestandteilen beispielsweise eines Abgasstroms ausgesetzt, wodurch eine Verschmutzung bzw. Korrosion des Wärmetauschers dauerhaft ausgeschlossen ist. Eine mögliche konkrete Ausgestaltung besteht darin, die Niedertemperaturenergie über einen im Sammeltank des Quenchwasserkreislaufs vorgesehenen Wärmetauscher in den Kreisprozess einzukoppeln. Hierbei kann der Wärmetauscher beispielsweise als Rohrschlangen-Wärmetauscher vorgesehen sein.

Eine noch wirksamere Trennung des Wärmetauschers und damit der den thermodynamischen Kreisprozess ausführenden Anlage von den ggf. verschmutzend und korrosiv wirkenden Bestandteilen beispielsweise eines Abgasstroms lässt sich dadurch erreichen, dass die Niedertemperaturenergie über einen in einem einem Quenchwasserkreislauf nachgeschalteten Wasserkreislauf vorgesehenen Wärmetauscher in den Kreisprozess eingekoppelt wird. Dadurch kann auch die Quenchwassertemperatur zum Zeitpunkt der Einsprühung reduziert werden.

Die Weiterverwendung der rückgewonnenen und auf ein höheres Temperaturniveau gehobenen Wärme besteht darin, diese als Nutzwärme aus dem thermodynamischen Kreisprozess in einen Nutzwärmekreislauf, insbesondere einen Fernwärmekreislauf auszukoppeln.

Bei einem nicht erfindungsgemäßen Verfahren kann der thermodynamische Kreisprozess als Verdampfer-Verdichter-Kondensator-Drossel-Kreislauf (VVKD-Kreislauf) ausgebildet sein, wobei die Wärmeeinkopplung im Verdampfer und die Wärmeauskopplung im Kondensator erfolgt. Derartige Systeme kommen in den verschiedensten Zweigen der Technik als Wärme- oder Kältemaschinen zum Einsatz, zeichnen sich durch ein hohes Maß an Wirtschaftlichkeit und Langlebigkeit aus und sind in für die unterschiedlichen Anwendungen optimierter Bauweise erhältlich.

Bei einem VVKD-Kreislauf handelt es sich bekanntermaßen um einen geschlossenen Kreislauf, in dem ein Arbeitsmedium stetig unter Zustandsänderungen (Verdampfung, Verdichtung, Kondensation, Entspannung) und ohne Stoffverbrauch zirkuliert. Für derartige Systeme stehen eine große Zahl von Arbeitsmedien kommerziell zur Verfügung. Besonders geeignet, auch vor dem Hintergrund niedrig zu haltender Betriebskosten, ist hierbei der Einsatz von Wasser, vorzugsweise enthärtetem und entgastem Wasser. Alternativ eignen sich auch neuartige Kältemittel mit einer erhöhter Phasenübergangstemperatur. Letztere liegt bei Normaldruck beispielsweise im Bereich ≥ 20°C, besonders bevorzugt ≥ 30°C, insbesondere ≥ 35°C.

Das Verfahren kann bei einer Sättigungstemperatur eines Abgasstroms von ca. 40°C bis ca. 80°C, vorzugsweise 60°C bis 75°C, insbesondere 65°C bis 73°C, durchgeführt. Dabei beträgt die Verdampfungstemperatur des Arbeitsmediums im VVKD-Kreislauf am Eingang des Verdampfers bevorzugt ca. 33°C bis ca. 75°C, vorzugsweise ca. 46°C bis 70°C, insbesondere 50°C bis 60°C, während der Verdampfungsdruck des Arbeitsmediums Wasser am Eingang des Verdampfers bevorzugt ca. 0,05 bar bis ca. 0,40 bar, vorzugsweise ca. 0,10 bis 0,30 bar, insbesondere 0,12 bar bis 0,20 bar, bzw. bei dem Kältemittel ca. 1,0 bar bis 3,2 bar, vorzugsweise ca. 1,4 bis 3,0 bar, insbesondere 1,6 bar bis 2,2 bar beträgt. Ferner wird der im VVKD-Kreislauf thermodynamische Kreisprozess derart eingestellt, dass der Dampfanteil im Arbeitsmedium am Eingang des Verdampfers bevorzugt ca. 5% bis ca. 15%, vorzugsweise ca. 8%, beträgt.

Der Druck des im Verdampfer vollständig in die Gasphase übergetretenen Arbeitsmediums (Dampfanteil 100%) wird im Verdichter auf einen Wert von ca. 0,2 bar bis ca. 1,3 bar, vorzugsweise ca. 0,5 bar bis ca. 1,1 bar, insbesondere ca. 0,6 bar bis 0, 9 bar, bzw. bei dem Kältemittel auf 3,5 bar bis 5,0 bar, vorzugsweise 3,8 bis 4,8 bar, insbesondere 4,0 bis 4,5 bar erhöht, wobei die Temperatur des Arbeitsmediums im Verdichter bevorzugt um einen Wert von 0°C bis 250°C, vorzugsweise 30°C bis 220°C, insbesondere ca. 100°C bis 200°C, erhöht wird. Hierbei arbeitet der Verdichter vorzugsweise mit einem isentropen Wirkungsgrad von 70% bis 90%, vorzugsweise ca. 75% bis 85%.

Das verdichtete Arbeitsmedium gelangt vom Verdichter zum Kondensator, wo es verflüssigt wird und dabei Kondensationswärme an ein Wärmeträgermedium abgibt, so dass das Arbeitsmedium Wasser am Ausgang des Kondensators vorzugsweise eine Temperatur von ca. 63°C bis ca. 108°C, vorzugsweise ca. 80°C bis ca. 105°C, insbesondere 90°C bis 100°C, bzw. das Kältemittel eine Temperatur von 63°C bis 108°C, vorzugsweise 80°C bis 105°C, insbesondere 85°C bis 95°C aufweist. Das Wärmeträgermedium seinerseits heizt sich im Kondensator durch Aufnahme der Kondensationswärme des Arbeitsmediums bevorzugt von einer Temperatur von 50°C bis 80°C, vorzugsweise ca. 65°C bis 75°C, auf eine Temperatur von 80°C bis 100°C, vorzugsweise ca. 85°C bis 95°C, auf.

Der Verdampfer kann als Spiralwärmetauscher oder Geradrohrwärmetauscher ausgebildet sein. Ferner ist der Kondensator vorzugsweise als Dampf-Wasser-Wärmetauscher ausgebildet. Hierbei handelt es sich um kommerziell verfügbare, bewährte, weil zuverlässig arbeitende und langlebige, Anlagenkomponenten.

In dem VVKD-Kreislauf kann in Strömungsrichtung des Arbeitsmediums gesehen hinter dem Kondensator und vor der Drossel ein Luftvorwärmer vorgesehen sein, welcher einen kleinen Teil der Wärme aus dem VVKD-Kreislauf auskoppelt. Die in diesem vorgewärmte Luft wird vorteilhafterweise einem noch nicht ganz entfeuchteten Abluftstrom zugeleitet und trägt dort zusätzlich zu dessen Entschwadung bei. Vorzugsweise wird die erwärmte Luft dem Abluftstrom in Strömungsrichtung hinter in der Abluftleitung vorgesehen Reinigungsstufen zugeführt. Konstruktiv wird dies in vorteilhafter Weise dadurch gelöst, dass die Zuführung der erwärmten Luft über ein Zentralrohr erfolgt. Hierdurch wird der Kontakt der vorgewärmten Luft mit dem zu entschwadenden Abluftstrom maximiert.

Beim erfindungsgemäßen Verfahren ist der thermodynamische Kreisprozess als Absorptionswärmepumpe ausgebildet, wobei die Wärmeeinkopplung im Verdampfer und die Wärmeauskopplung im Kondensator erfolgt. Derartige Systeme sind technisch ausgereift, am Markt bekannt und kommen in den verschiedensten Zweigen der Technik als Wärme- oder Kältemaschinen zum Einsatz, zeichnen sich durch ein hohes Maß an Wirtschaftlichkeit und Langlebigkeit aus und sind in für die unterschiedlichen Anwendungen optimierter Bauweise erhältlich. Als Antriebsenergie für die Absorptionswärmepumpe dient hier nicht Strom, sondern Heißwasser oder Dampf, welches beispielsweise in der Entnahmestufe einer Kondensations-Dampfturbine entnommen oder in einem Gas-, Biomasse- oder sonstigen Kessel erzeugt werden kann. Thermalöl aus Produktionsprozessen kann - entweder direkt oder durch Übertragung auf einen eigenen Heisswasserkreis - ebenfalls als Antriebsenergie verwendet werden.

Bei der Absorptionswärmepumpe wird bevorzugt Wasser als Arbeitsmedium verwendet, wobei das Wasser in einer LiBr-Lösung periodisch in einem Absorber gelöst und in einem Austreiber ausgetrieben wird. Das in diesem Falle als absorbierendes Salz fungierende Lithiumbromid ist ein dem Kochsalz chemisch ähnliches Salz, welches allerdings in der Natur nur sehr selten vorkommt. Der Grund für den Einsatz in Absortions-Wärmepumpen oder -Kältemaschinen ist seine sehr hohe Löslichkeit von bis zu 70% Salzgehalt.

Zur Steigerung der Effizienz der Absorptions-Wärmepunpe kann neben der Auskopplung von Wärme im Kondensator auch vorgesehen sein, die beim Auflösen des verdampften Wassers in der LiBr-Lösung im Absorber entstehende Wärme als Nutzwärme auszukoppeln. Bevorzugt erfolgt dabei die Wärmeauskopplung sowohl im Kondensator als auch im Absorber über jeweils einen Wärmetauscher, wobei beide Wärmetauscher Teil ein und desselben Nutzwärmekreislaufs sind. Vorteilhafterweise sind die Wärmetauscher im Nutzwärmekreislauf seriell hintereinander geschaltet. Hierdurch wird erreicht, dass das Wärmeträgermedium im Nutzwärmekreislauf stufenweise um jeweils kleine Temperaturdifferenzen auf die gewünschte Temperatur angehoben wird.

Erfindungsgemäß ist dabei vorgesehen, dass die Niedertemperaturwärme, die beispielsweise einem Quenchwasserkreislauf entnommen wird, in einen Wärmetauscher eingekoppelt wird, welcher mit dem Nutzwärmekreislauf verbunden ist.

Die eingangs genannte Aufgabe wird erfindungsgemäß auch durch eine Vorrichtung zur Wärmerückgewinnung aus feuchtebelasteter Abluft gemäß Anspruch 10 gelöst.

Im Folgenden wird die Erfindung anhand Ausführungsbeispiele darstellender Zeichnungen näher erläutert. Es zeigen:
- Fig. 1: eine nicht von der Erfindung umfasste Vorrichtung zur Rückgewinnung von Kondensationswärme in einem Abluftstrom unter Einsatz eines VVKD-Kreislaufs in schematischer Ansicht in einer ersten Ausführung,
- Fig. 2: die Vorrichtung der Fig. 1 in schematischer Ansicht in einer zweiten Ausführung,
- Fig. 3: die Vorrichtung der Fig. 1 in schematischer Ansicht in einer dritten Ausführung,
- Fig. 4: eine erfindungsgemäße Vorrichtung zur Rückgewinnung von Kondensationswärme nach dem erfindungsgemäßen Verfahren unter Einsatz einer Absorptions-Wärmepumpe in einem Abluftstrom in schematischer Ansicht und
- Fig. 5: die Absorptions-Wärmepumpe der Vorrichtung gemäß Fig. 4 in einer detaillierten Ansicht.

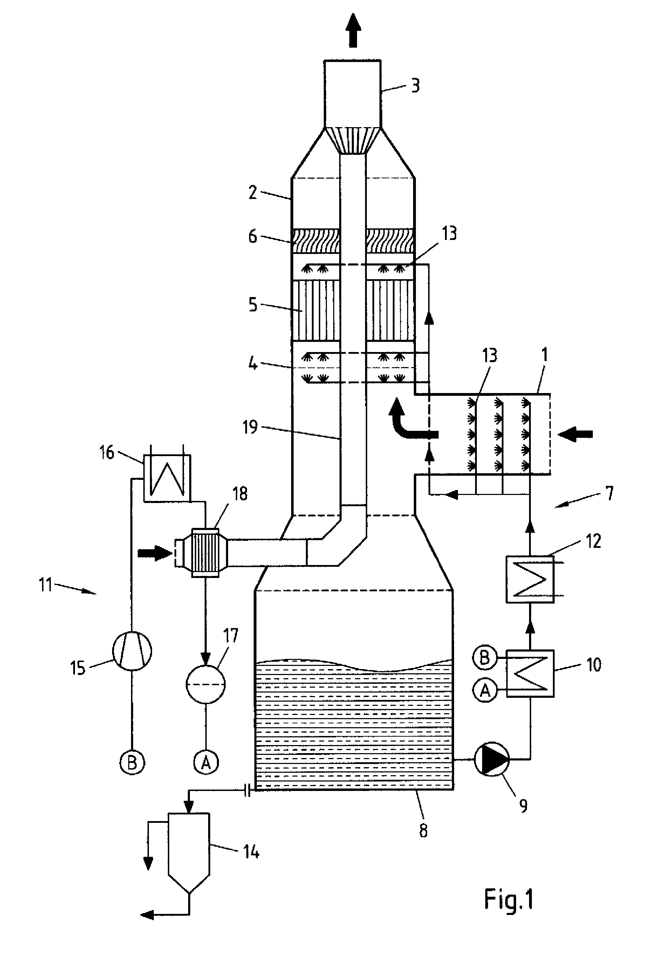

In Fig. 1 ist eine Vorrichtung zur Rückgewinnung von Kondensationswärme in einem feuchtebelasteten Abluftstrom dargestellt, bei der die Wärme als Niedertemperaturwärme in einen thermodynamischen Kreisprozess eingekoppelt wird, dort auf ein höheres Temperaturniveau angehoben wird und auf dem hohen Temperaturniveau als Nutzwärme ausgekoppelt wird, wobei gleichzeitig zumindest ein Teil der in der Abluft enthaltenen Feuchtigkeit kondensiert wird.

Die Vorrichtung umfasst eine horizontal verlaufende Abluftleitungl, diein eine vertikalverlaufende Abluftleitung 2 übergeht, an die sich in Strömungsrichtung der Abluft wiederum ein Kamin 3 anschließt. In der vertikal verlaufenden Abluftleitung 2 sind von unten nach oben gesehen verschiedene Reinigungsstufen, nämlich ein Gasverteilboden 4, ein Elektrofilter 5 zur Feststoffausscheidung aus dem Abluftstrom sowie ein Tropfenabscheider 6 zur Vermeidung von Tropfenauswurf aus dem Kamin 3, angeordnet.

In der Vorrichtung ist ein Quenchwasserkreislauf 7 zur Kühlung des Abluftstroms und damit zur Auskondensierung der in dem Abluftstrom enthaltenen Feuchtigkeit vorgesehen. Der Quenchwasserkreislauf 7 umfasst seinerseits einen am Fuße der vertikal verlaufenden

Abluftleitung 2 vorgesehenen Quenchwassersammeltank 8, eine Quenchwasserpumpe 9 und weiter in Strömungsrichtung des Quenchwassers folgend, einen als Wärmetauscher, vorzugsweise als Spiral- oder Geradrohrwärmetauscher ausgebildeten Verdampfer 10 als Bestandteil eines im folgenden noch näher zu erläuternden Verdampfer-Verdichter-Kondensator-Drossel-Kreislaufs (VVKD-Kreislauf) 11, optional noch einen Niedertemperatur-Wärmetauscher 12 sowie eine Anzahl an verschiedenen Stellen in der horizontalen und der vertikalen Abluftleitung 1, 2 angeordneter Quenchdüsen 13. Schließlich umfasst die Vorrichtung noch eine vom Quenchwassersammeltank 8 abgehende Abwasserbehandlungseinheit 14, über die während des Betriebes der Vorrichtung dem Quenchwasserkreislauf 7 Wasser entzogen werden kann, um den durch die kontinuierliche Auskondensierung der Feuchte im Abluftstrom bedingten kontinuierlichen Wasserzufluss zum Quenchkreislauf 7 zu kompensieren.

Der bereits erwähnte WKD-Kreislauf 11 umfasst neben dem genannten Verdampfer 10, der aus Gründen der Übersichtlichkeit von den übrigen Komponenten getrennt dargestellt ist, einen Verdichter 15, einen vorzugsweise als Dampf-Wasser-Wärmetauscher ausgebildeten Kondensator 16 sowie eine Drossel 17. Zwischen dem Kondensator 16 und der Drossel 17 ist vorliegend noch ein Luftvorwärmer 18 vorgesehen, bei dem die erwärmte Luft über ein Zentralrohr 19 dem Abluftstrom direkt unterhalb des Kamins 3 zugeführt werden kann.

Die Funktion der Vorrichtung ist die folgende:
Ein beispielsweise von einer Trocknungsanlage erzeugter feuchtebelasteter Abluftstrom strömt durch die horizontale Abluftleitung 1, gelangt von dort in die vertikale Abluftleitung 2 und schließlich über den Kamin 3 ins Freie. Der Abluftstrom passiert dabei die in den Abluftleitungen 1, 2 gruppenweise angeordneten Quenchdüsen 13 sowie den in der vertikalen Abluftleitung 2 angeordneten Gasverteilboden 4, den Elektrofilter 5 und den Tropfenabscheider 6, wobei die im Abluftstrom enthaltene Feuchte mit einer Rate von beispielsweise 6 m³/h annähernd vollständig auskondensiert, so dass der Abluftstrom aus dem Kamin 3 mit minimaler Dampffahne ausströmt. Die Quenchdüsen 13 werden aus dem Quenchwassersammeltank 8 über die Pumpe 9 mit Quenchwasser versorgt, dessen Temperatur im Sammeltank 8 vorzugsweise ca. 70°C beträgt. Vor dem Erreichen der Quenchdüsen 13 durchströmt das Quenchwasser den Verdampfer 10 sowie den Niedertemperatur-Wärmetauscher 12. In letzterem kann eine zusätzliche Niedertemperatur-Wärmeauskopplung erfolgen, bei dem ein Wärmeträgermedium typischerweise von 40 °C auf 60°C erhitzt wird. Die gesamte Niedertemperaturwärmeleistung beträgt bei einer angenommenen Kondensations-Abwassermenge von 6 m³/h 3,8 MW.

Das über die Quenchdüsen 13 in den Abluftstrom gesprühte Quenchwasser gelangt sodann zusammen mit der aus dem Abluftstrom auskondensierten Feuchte wieder in den Quenchwassersammeltank 8, aus dem zur Konstanthaltung des Quenchwasservolumens ensprechend der angegebenen Kondensationsrate Wasser abgeleitet und der Abwasserbehandlungseinheit 14 zugeführt wird.

Das im VVKD-Kreislauf 11 als Arbeitsmedium vorzugsweise eingesetzte enthärtete und entgaste Wasser wird im Verdampfer 10 vorliegend bei gegebener Quenchwassertemperatur von 70°C bei 0,16 bar (Absolutdruck) und 55°C vollständig verdampft und anschließend im Verdichter 15 auf höheren Druck und höhere Temperatur verdichtet, vorliegend 1 bar und 283°C bei Annahme eines isentropen Wirkungsgrades des Verdichters 15 von 80%. Durch diese Verdichtung wird überhitzter Dampf mit 283°C erzeugt und dessen Wärme im Kondensator 16 abgegeben. In dem Kondensator 16 wird ein Wärmeträgermedium, beispielsweise Fernwärmewasser, von 70°C auf 90°C erhitzt. Dabei wird der überwiegende Teil der Wärme des Arbeitsmediums bei konstant 100°C abgegeben bis der Wasserdampf vollständig in die flüssige Phase überführt ist. Wenn die Kondensationswärme nicht vollständig zur Erwärmung des Wärmeträgermedium genutzt werden kann, ist es möglich die dann noch vorhandene Wärmemenge in dem hinter dem Kondensator 16 vorgesehenen Luftvorwärmer 18 aus dem VVKD-Kreislauf auszukoppeln. Vorliegend wird die im Luftvorwärmer 18 erwärmte Luft über das Zentralrohr 19 dem Abluftstrom direkt unterhalb des Kamins 3 zugeführt und trägt damit zusätzlich zur Entschwadung des Abluftstroms bei. Auch ist es möglich, die im Luftvorwärmer gewonnene Wärme anderweitig zu verwenden.

Nach erfolgter Verflüssigung des Wassers im Kondensator 16 wird dieses in der Drossel 17 entspannt. Diese Entspannung ist mit einer Druck und Temperaturabnahme bis zum Verdampfungszustand (0,16 bar und 55°C) verbunden. Es bildet sich Nassdampf mit einer Dampfziffer von 8%, d.h. einem Dampfanteil von 8%, welcher dem Verdampfer 10 zugeführt und dort wiederum unter Wärmezufuhr verdampft wird, womit der Kreislauf geschlossen ist.

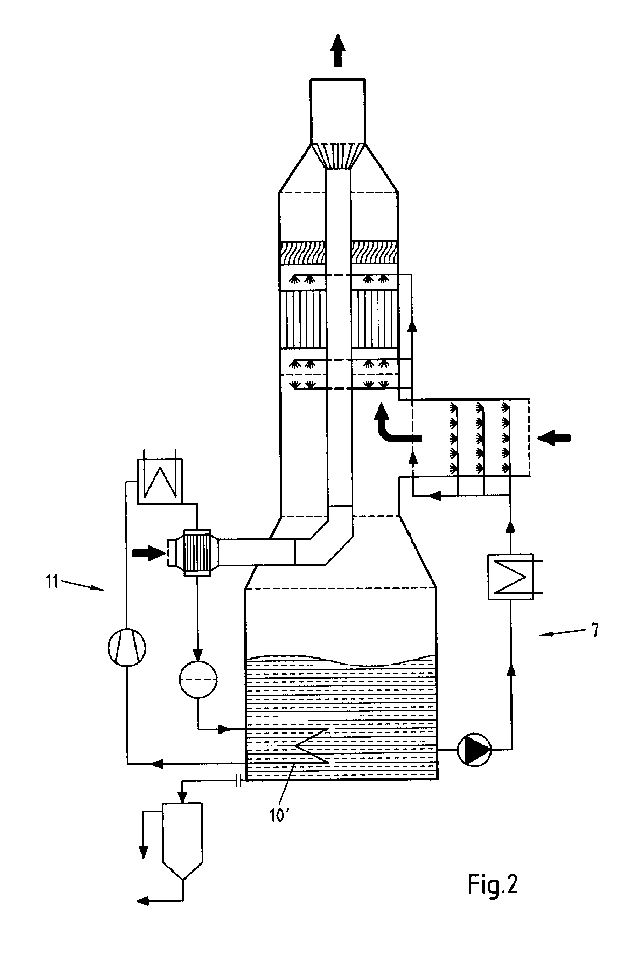

Die in Fig. 2 dargestellte modifizierte Ausführungsform der vorstehend beschriebenen Vorrichtung unterscheidet sich von dieser lediglich dadurch, dass der Verdampfer 10' nicht im Quenchwasserkreislauf, d.h. im Leitungssystem, sondern im Quenchwassersammeltank 8 angeordnet ist, wobei der Verdampfer 10' vorzugsweise als Rohrschlangen-Wärmetauscher ausgebildet ist. Der Vorteil dieser Ausführungsform besteht in der geringeren Temperatur im Abwasser. Nachteilig an dieser Ausführungsform ist jedoch der etwas schlechtere Wärmeübergang sowie die Gefahr von Verschmutzungen und Ablagerungen. Alternativ kann der Wärmetauscher auch in der Abwasserleitung, insbesondere zwischen dem Quenchwassersammeltank 8 und der Abwasserbehandlungseinheit 14 angeordnet sein.

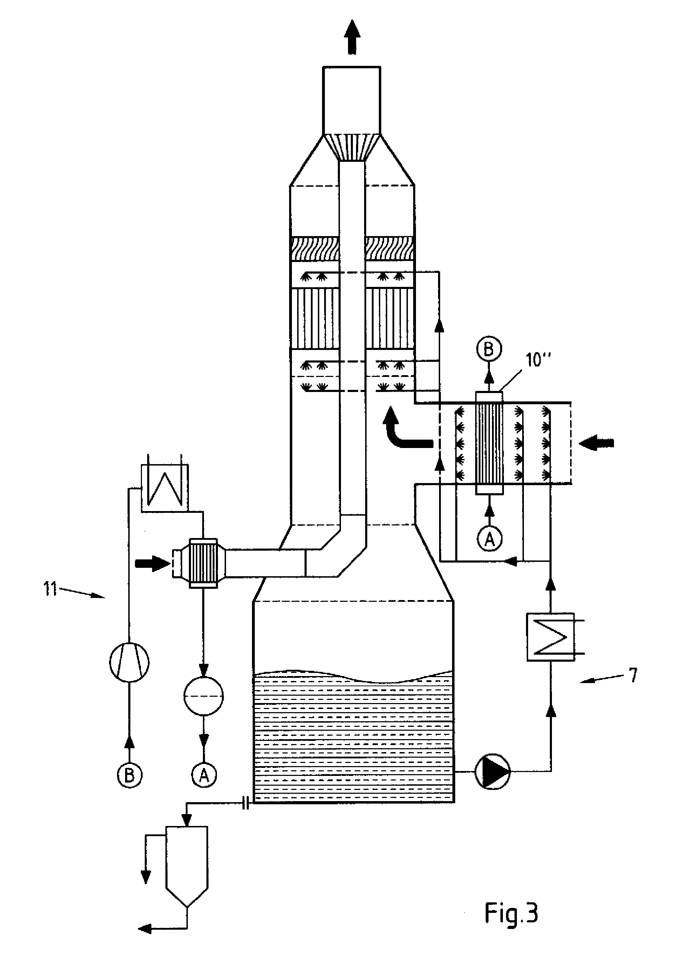

Die in Fig. 3 dargestellte Ausführungsform unterscheidet sich wiederum von der der Fig. 1 dadurch, dass hier der vorzugsweise in Form von vertikalen Geradrohrbündeln ausgebildete Verdampfer 10" direkt in der horizontalen Abluftleitung 1 und somit unmittelbar im Abluftstrom vorgesehen ist. Nachteilig an dieser Ausführungsform ist jedoch, dass der Verdampfer 10 einer erhöhten Verschmutzung und Korrosion ausgesetzt ist. Dennoch bietet sich eine solche Anordnung insbesondere für relativ trockene, vorgereinigte oder wenig belastete Abgase an.

In der folgenden Tabelle sind die technischen Daten einer Ausführung des Verfahrens zusammengefasst:

| | |
|---|---|
| Sättigungstemperatur | 70°C |
| Kondensations-Abwassermenge | 6 m³/h |
| Verdampfungstemperatur | 55°C |
| Verdampfungsdruck | 0.16 bar |
| Verdampferleistung | 3,8 MW |
| Verdampfungsmenge | 6.275 kg/h |
| Isentroper Wirkungsgrad Verdichter | 85 % |
| Temperatur nach Verdichter | 283°C |
| Druck nach Verdichter | 1 bar |
| Sättigungstemperatur nach Enthitzung | 100°C |
| Verdichterleistung | 767 kW |
| Hochtemperatur - Rückl./Vorl. | 70/90°C |
| Hochtemperatur Wärmeleistung | 4, 8 MWpro Kondensation von 6 m³/h |
| Niedertemperatur - Rückl./Vorl. | 40/60°C |
| Niedertemperatur Wärmeleistung | 3,8MW pro Kondensation von 6 m³/h |

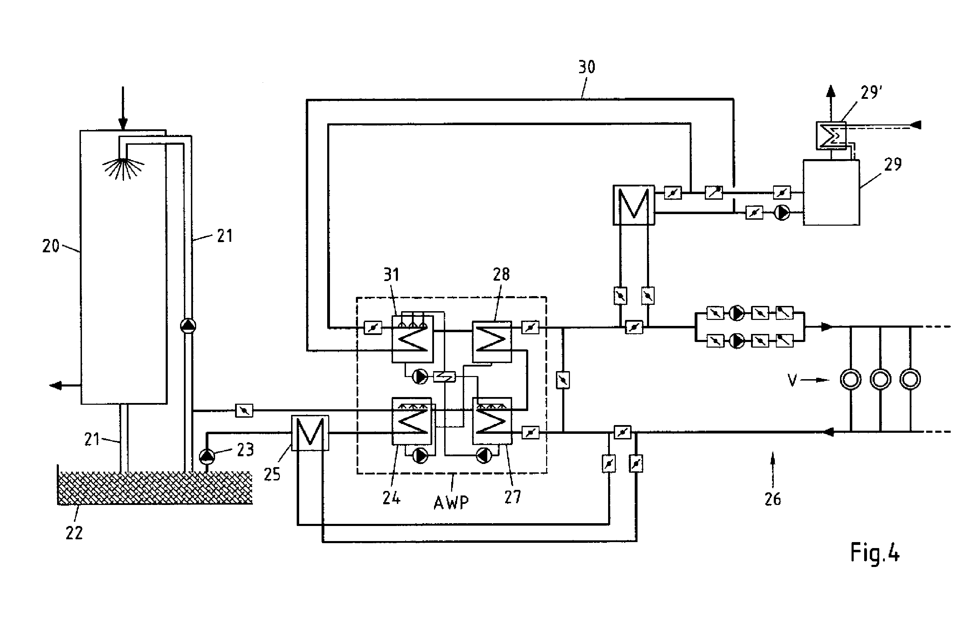

In Fig. 4 ist nun eine Vorrichtung zur Rückgewinnung von Kondensationswärme unter Einsatz einer Absorptionswärmepumpe in einem Abluftstrom in schematischer Ansicht dargestellt.

In einem Waschturm 20 wird ein diesen von oben nach unten durchströmender feuchtebelasteter Abluftstrom mit in einem Quenchwasserkreislauf 21 gefördertem Quenchwasser beaufschlagt, wobei die in dem Abluftstrom enthaltene Feuchte annährend vollständig auskondensiert, so dass der Abluftstrom den Waschturm 20 mit minimaler Dampffahne verlässt. Bei der kondensation der Feuchte wird das Quenchwasser auf eine Temperatur von ca. 65° aufgewärmt.

Aus dem Quenchwassertank 22 wird über eine separate Pumpe 23 ein Teil des Quenchwassers abgezweigt und durch den Verdampfer 24 einer Absorptionswärmepumpe AWP geleitet. Anschließend wird das Quenchwasser wieder in den Quenchwasserkreislauf 21 zurückgeführt. Zwischen Pumpe 23 und dem Verdampfer 24 durchläuft das ca. 65° warme Quenschwasser einen weiteren Wärmetauscher 25, welcher seinerseits mit einem Nutzwärmekreislauf, vorliegend einem Fernwärmekreislauf 26 verbunden ist.

Das Wärmeträgermedium des Fernwärmekreislaufs 26 durchläuft ferner den Absorber 27 und anschließend den Kondensator 28 der Absorptionswärmepumpe AWP, bevor es die dort aufgenommene Wärme an eine Anzahl von Verbrauchern V abgibt.

Die Antriebsenergie für die Absorptionswärmepumpe AWP wird vorliegend durch einen gasgefeuerten Heißwasserkessel 29 (Leistungsbereich 3,5 - 15 MW) mit Verbrennungsluftvorwärmung 29' bereitgestellt und über einen unter Überdruck von ca. 10 bar stehenden Heißwasserkreislauf 30 in den Austreiber 31 der Absorptionswärmepumpe AWP eingekoppelt.

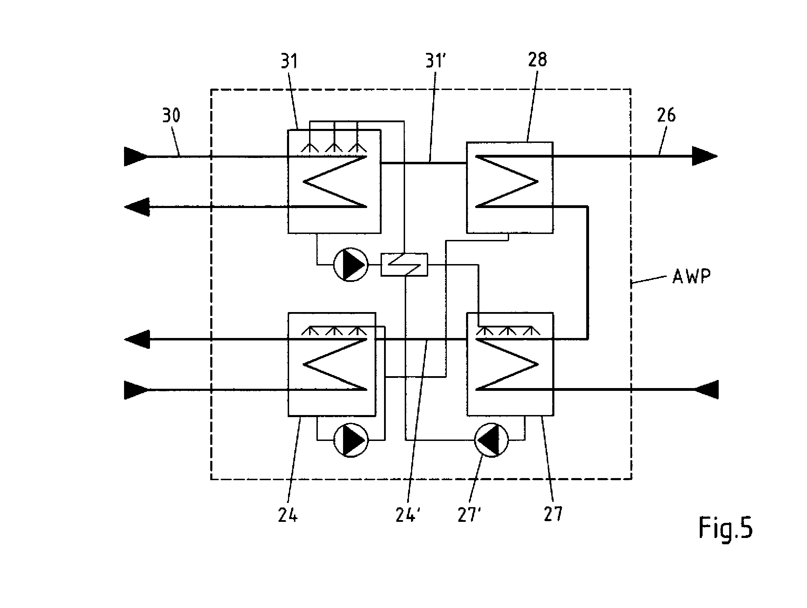

Die auf der Lösung von Wasserdampf in einer Lithiumbromid-Salzlösung mit anschließender Austreibung basierende Absorptionswärmepumpe AWP ist in Fig. 5 im Detail dargestellt und wird im Folgenden näher erläutert: Wie in Fig. 4 gezeigt, durchläuft das aus dem Quenchwassertank 22 durch die Pumpe 23 (Pumpenleistung ca. 338 m³/h) geförderte Quenchwasser zunächst einen Wärmetauscher 25, welcher mit dem Fernwärmekreislauf 26 verbunden ist und das Quenchwasser von einer Temperatur von ursprünglich ca. 65°C auf ca. 61°C abkühlt (Kühlleistung ca. 1,7 MW). Das abgekühlte Quenchwasser durchläuft sodann den Verdampfer 24 der Absorptionswärmepumpe AWP und verdampft dort mit einer Leistung von ca. 3,3 MW das in der Absorptionswärmepumpe AWP als Arbeitsmedium eingesetzte Wasser, wobei sich das Quenchwasser auf eine Temperatur von ca. 52°C weiter abkühlt. Der in dem Verdampfer 24 erzeugte Wasserdampf strömt über eine Dampfleitung 24' zum Absorber 27, wo er von der stark hygroskopischen Lithiumbromid-Lösung aufgenommen wird. Die dabei entstehende Lösungswärme wird an das Wärmeträgermedium des Fernwärmekreislaufs 26, welches zuvor im Wärmetauscher 25 bereits durch das Quenchwasser von einer Rücklauftemperatur von max. 55°C auf ca. 62°C erwärmt wurde, abgegeben.

Die durch die Aufnahme des Wasserdampfs verdünnte Lithiumbromid-Lösung wird sodann von einer Flüssigkeitspumpe 27' zum Austreiber 31 gefördert, wo sie durch Zufuhr der im Heißwasserkessel 29 erzeugten Wärme wieder eingedampft, d.h. aufkonzentriert wird. Der Wärmeübertrag von dem durch den Heißwasserkreislauf 30 geförderten Heißwasser, welches sich im Austreiber 31 von ca. 149° auf ca. 129°C abkühlt, erfolgt mit einer Leistung von ca. 4,1 MW.

Der im Austreiber 31 durch Eindampfen der Lithiumbromid-Lösung entstehende Wasserdampf wird über eine Dampfleitung 31' (vgl. Fig. 5) in den Kondensator 28 geleitet. Dort wird er unter Wärmeabgabe an das Wärmeträgermedium des Fernwärmekreislaufs 26 kondensiert und strömt als verflüssigtes Arbeitsmedium über eine Wasserleitung 28' wieder zum Verdampfer 24, wo es erneut verdampft wird. Gleichzeitig wird die eingedampfte Lithiumbromid-Lösung über die Lösungspumpe 31" wieder in den Absorber 27 gepumpt.

Das somit zunächst im Absorber 27 und anschließend im Kondensator 28 erwärmte Wärmeträgermedium des Fernwärmekreislaufs 26 wird vorliegend von einer Temperatur von ca. 62°C am Eingang des Absorbers 27 auf eine Temperatur von ca. 90°C am Ausgang des Kondensators 28 erhitzt. Diese Temperatur stellt nun die Fernwärme-Vorlauftemperatur dar und kann im Gegensatz zum auf lediglich ca. 65° erwärmten Quenchwasser für eine Vielzahl außerbetrieblicher Anwendungen genutzt werden.

## Patentansprüche

1. Verfahren zur Wärmerückgewinnung aus in einem Trocknungsprozess anfallender feuchtebelasteter Abluft, wobei
die Wärme als Niedertemperaturwärme in einen als Absorptionswärmepumpe (AWP) ausgebildeten, thermodynamischen Kreisprozess eingekoppelt wird, dort auf ein höheres Temperaturniveau angehoben wird und auf demhohen Temperaturniveau als Nutzwärme ausgekoppelt wird, und wobei gleichzeitig zumindest ein Teil der in der Abluft enthaltenen Feuchtigkeit kondensiert wird, **dadurch gekennzeichnet**, **dass** vor dem Einkoppeln von Niedertemperaturwärme in den thermodynamischen Kreisprozess zunächst Niedertemperaturwärme über einen mit einem Nutzwärmekreislauf (26) verbundenen Wärmetauscher (25) in den Nutzwärmekreislauf eingekoppelt wird und dass die Wärmeeinkopplung der Niedertemperaturwärme im Verdampfer (24) der Absorptionswärmepumpe (AWP) und die Wärmeauskopplung in den Nutzwärmekreislauf (26) zunächst im Absorber (27) der Absorptionswärmepumpe (AWP) und anschließend im Kondensator(28) der Absorptionswärmepumpe (AWP) erfolgt.

2. Verfahren nach Anspruch 1,
**dadurch gekennzeichnet, dass** die Niedertemperaturwärme über einen unmittelbar im Abgasstrom vorgesehenen Wärmetauscher in den thermodynamischen Kreisprozess eingekoppelt wird.

3. Verfahren nach Anspruch 1,
**dadurch gekennzeichnet, dass** die Niedertemperaturwärme über einen in einem Quenchwasserkreislauf (21) vorgesehenen Wärmetauscher (24) aus dem Abgasstrom in den Kreisprozess eingekoppelt wird.

4. Verfahren nach Anspruch 3,
**dadurch gekennzeichnet, dass** die Niedertemperaturwärme über einen im Sammeltank des Quenchwasserkreislaufs vorgesehenen Wärmetauscher in den Kreisprozess eingekoppelt wird.

5. Verfahren nach Anspruch 4,
**dadurch gekennzeichnet**, **dass** der Wärmetauscher als Rohrschlangenwärmetauscher ausgebildet ist.

6. Verfahren nach Anspruch 1,
**dadurch gekennzeichnet, dass** die Niedertemperaturwärme über einen in einem einem Quenchwasserkreislauf nachgeschalteten Wasserkreislauf vorgesehenen Wärmetauscher in den Kreisprozess eingekoppelt wird.

7. Verfahren nach einem der Ansprüche 1 bis 6,
**dadurch gekennzeichnet, dass** in der Absorptionswärmepumpe (AWP) Wasser als Arbeitsmedium verwendet wird, wobei das Wasser in einer Lithiumbromid-Lösung periodisch in einem Absorber (27) gelöst und in einem Austreiber (31) ausgetrieben wird.

8. Verfahren nach einem der Ansprüche 1 bis 7,
**dadurch gekennzeichnet, dass** die Wärmeauskopplung über einen im Kondensator (28) vorgesehenen Wärmetauscher und über einen im Absorber (27) vorgesehenen Wärmetauscher erfolgt, wobei die Wärmetauscher Teil eines Nutzwärmekreislaufs (26) sind.

9. Verfahren nach Anspruch 8,
**dadurch gekennzeichnet, dass** die Wärmetauscher im Nutzwärmekreislauf (26) seriell hintereinander geschaltet sind.

10. Vorrichtung zur Wärmerückgewinnung aus feuchtebelasteter Abluft gemäß dem Verfahren nach einem der Ansprüche 1 bis 9 mit einer einen thermodynamischen Kreisprozess ausführenden Absorptionswärmepumpe (AWP), einem Nutzwärmekreislauf (26) und mit einem mit dem Nutzwärmekreislauf (26) verbundenen Wärmetauscher (25) zum Einkoppeln von Niedertemperaturwärme in den Nutzwärmekreislauf (26), wobei die Absorptionswärmepumpe (AWP) einen Verdampfer (24) zum Einkoppeln von Niedertemperaturwärme in den thermodynamischen Kreisprozess umfasst und wobei die Absorptionswärmepumpe (AWP) einen Absorber (27) und einen Kondensator (28) zur WärmeauskopplungindenNutzwärmekreislauf (26) aufweist.

## Claims

1. Method for recovering heat from humid waste air arising in a drying process, wherein the heat is coupled as low-temperature heat into a thermodynamic cycle designed as an absorption heat pump (AHP), is raised to a higher temperature level there and is decoupled at the high temperature level as useful heat, and wherein at the same time at least one part of the moisture contained in the waste air is condensed, **characterised in that** before coupling the low-temperature heat into the thermodynamic cycle, firstly low-temperature heat is coupled into the useful heat cycle via a heat exchanger (25) connected to a useful heat cycle (26), and **in that** the heat coupling in of the low-temperature heat takes place in the evaporator (24) of the absorption heat pump (AHP) and the heat decoupling into the useful heat cycle (26) firstly takes place in the absorber (27) of the absorption heat pump (AHP) and subsequently in the condenser (28) of the absorption heat pump (AHP).

2. Method according to Claim 1, **characterised in that** the low-temperature heat is coupled into the thermodynamic cycle via a heat exchanger provided directly in the waste gas flow.

3. Method according to Claim 1, **characterised in that** the low-temperature heat is coupled into the thermodynamic cycle from the waste gas flow via a heat exchanger (24) provided in a quench water cycle (21).

4. Method according to Claim 3, **characterised in that** the low-temperature heat is coupled into the thermodynamic cycle via a heat exchanger provided in the collecting tank of the quench water cycle.

5. Method according to Claim 4, **characterised in that** the heat exchanger is designed as a coil-type heat exchanger.

6. Method according to Claim 1, **characterised in that** the low-temperature heat is coupled into the thermodynamic cycle via a heat exchanger provided in a water cycle downstream of a quench water cycle.

7. Method according to any one of Claims 1 to 6, **characterised in that** water is used as the working fluid in the absorption heat pump (AHP), wherein the water is periodically dissolved in a lithium bromide solution in an absorber (27) and expelled in an expeller (31).

8. Method according to any one of Claims 1 to 7, **characterised in that** the heat decoupling takes place via a heat exchanger provided in the condenser (28) and via a heat exchanger provided in the absorber (27), wherein the heat exchangers are part of a useful heat cycle (26).

9. Method according to Claim 8, **characterised in that** the heat exchangers are serially connected one after the other in the useful heat cycle (26).

10. Device for recovering heat from humid waste air according to the method according to any one of Claims 1 to 9, having an absorption heat pump (AHP) performing a thermodynamic cycle, having a useful heat cycle (26) and having a heat exchanger (25) connected to the useful heat cycle (26) for coupling low-temperature heat into the useful heat cycle (26), wherein the absorption heat pump (AHP) comprises an evaporator (24) for coupling low-temperature heat into the thermodynamic cycle, and wherein the absorption heat pump (AHP) has an absorber (27) and a condenser (28) for decoupling heat into the useful heat cycle (26).

## Revendications

1. Procédé destiné au gain de chaleur à partir d'air vicié chargé en humidité produit au cours d'un procédé de séchage, dans lequel la chaleur est injectée en tant que chaleur basse température dans un procédé cyclique thermodynamique formé en tant que pompe à chaleur à absorption (AWP), y est élevée à un niveau de température supérieur et sortie en tant que chaleur utile au niveau de température élevé, et sachant que parallèlement, au moins une partie de l'humidité présente dans l'air vicié est condensée,
**caractérisé en ce qu'**avant l'injection de la chaleur basse température dans le procédé cyclique thermodynamique, la chaleur basse température est d'abord injectée dans un circuit de chaleur utile (26) par un échangeur de chaleur (25) relié au circuit de chaleur utile, et que l'injection de chaleur de la chaleur basse température a lieu dans l'évaporateur (24) de la pompe à chaleur à absorption (AWP) et la sortie de chaleur dans le circuit de chaleur utile (26) a lieu d'abord dans l'absorbeur (27) de la pompe à chaleur à absorption (AWP) et ensuite dans le condensateur (28) de la pompe à chaleur à absorption (AWP).

2. Procédé selon la revendication 1, **caractérisé en ce que** la chaleur basse température est injectée dans le procédé cyclique thermodynamique par un échangeur de chaleur prévu directement dans le flux de gaz d'évacuation.

3. Procédé selon la revendication 1, **caractérisé en ce que** la chaleur basse température est injectée du flux de gaz d'évacuation dans le procédé cyclique, par un échangeur de chaleur (24) prévu dans un circuit d'eau de trempe (21).

4. Procédé selon la revendication 3, **caractérisé en ce que** la chaleur basse température est injectée dans le procédé cyclique par un échangeur de chaleur prévu dans la cuve de collecte du circuit d'eau de trempe.

5. Procédé selon la revendication 4, **caractérisé en ce que** l'échangeur de chaleur est conçu en tant qu'échangeur de chaleur à serpentin.

6. Procédé selon la revendication 1, **caractérisé en ce que** la chaleur basse température est injectée dans le procédé cyclique par un échangeur de chaleur prévu dans un circuit d'eau monté en aval d'un circuit d'eau de trempe.

7. Procédé selon l'une des revendications 1 à 6, **caractérisé en ce que** de l'eau est employée en tant que fluide de travail dans la pompe à chaleur à absorption (AWP), sachant que l'eau est dissoute périodiquement dans une solution de bromure de lithium dans un absorbeur (27) et expulsée dans un expulseur (31).

8. Procédé selon l'une des revendications 1 à 7, **caractérisé en ce que** la sortie de chaleur a lieu par un échangeur de chaleur prévu dans le condensateur (28) et par un échangeur de chaleur prévu dans l'absorbeur (27), sachant que les échangeurs de chaleur font partie d'un circuit de chaleur utile (26).

9. Procédé selon la revendication 8, **caractérisé en ce que** les échangeurs de chaleur sont montés en série l'un derrière l'autre dans le circuit de chaleur utile (26).

10. Procédé destiné au gain de chaleur à partir d'air vicié chargé en humidité selon le procédé selon l'une des revendications 1 à 9, comprenant une pompe à chaleur à absorption (AWP) exécutant un procédé cyclique thermodynamique, un circuit de chaleur utile (26), et comprenant un échangeur de chaleur (25) relié au circuit de chaleur utile (26) pour amener de la chaleur basse température dans le circuit de chaleur utile (26), sachant que la pompe à chaleur à absorption (AWP) comprend un évaporateur (24) pour amener de la chaleur basse température dans le procédé cyclique thermodynamique et sachant que la pompe à chaleur à absorption (AWP) présente un absorbeur (27) et un condensateur (28) pour la sortie de chaleur dans le circuit de chaleur utile (26).
